# EUROPEAN PATENT SPECIFICATION

(11) **EP 2 056 006 B1**
(45) Date of publication and mention of the grant of the patent: **29.11.2017**
(21) Application number: 08105268.0
(22) Date of filing: 09.09.2008
(51) Int. Cl.: F24D 19/00, F16K 5/06, F16K 27/06, F24D 3/10

(54) **Ball valve**
Kugelventil
Soupape sphérique

(30) Priority: 30.10.2007 IT MI20072088
(43) Date of publication of application: 06.05.2009
(73) Proprietor: FIMCIM S.P.A., 20121 Milano (MI) (IT)
(72) Inventor: Cimberio Renzo, 20121 Milano (IT)
(74) Representative: Ponzellini, Gianmarco

(56) References cited:
- EP-A1- 1 748 234
- EP-A2- 0 343 909
- EP-A2- 1 835 209
- DE-U1- 9 205 469
- US-B1- 6 186 169

## Description

The present invention relates to the use of a valve, in particular a valve for opening and closing the fluid connection between a device placed upstream of the valve and a supply line placed downstream of said valve.

For instance, these valves are placed downstream of a meter and upstream of a water supply network to stop delivery of fluid to the latter, for example for carrying out maintenance operations on said network and subsequently restore fluid delivery to the network.

In these applications, the valve is connected on one side to the meter and, on the opposite side, to a feeding pipe to feed the supply network.

Very often the meter is housed in a pit placed out of the building wherein the supply network extends, to enable the authorised operators to carry out the necessary reading on the meter.

Depending on the shape and sizes of the pit and the type and model of the meter, it may happen that the fluid feeding pipe is substantially in alignment with the inlet direction of the fluid into the valve (that is to say that the feeding pipe is substantially horizontal) and it may also happen that the feeding pipe is offset relative to the inlet direction of the fluid into the valve (that is to say that the feeding pipe is substantially vertical).

In order to enable correct connection between the meter and the feeding pipe, valves are available in which the inlet and outlet are substantially in alignment - which valves are known as straight-outlet valves - and valves in which the inlet and outlet are offset from each other - which valves are known as right-angled-outlet valves.

However, the simultaneous availability of two types of valves has disadvantages, because a double stock of same is required and also transport to the installation place of a double amount of valves than those actually needed is made necessary.

In particular, the method of adopting valves dedicated to the configuration of the pit is presently very desirable, as far as connection of the waterworks of a building to the water network is concerned.

For applications and purposes different from those mentioned above, valves have been conceived which have an inlet and two outlets that are substantially perpendicular to each other.

In these valves, the tap for opening and closing the valve further acts on suitable deflectors to selectively bring only one outlet into fluid communication with the inlet, while the other outlet is isolated from the inlet.

Therefore, the tap of these valves can be moved between two maximum-opening conditions and one closed condition of the valve. In more detail the valve, in addition to defining the closed condition, can be moved between a condition in which there is a connection between the inlet and the first outlet and a condition in which connection takes place between the inlet and the second outlet. Supposing that use of these valves for application in the concerned water sector is possible, as they are able to overcome the above mentioned drawbacks, their construction is at all events very complicated, which involves high production costs.

In addition, since the tap can be switched between a plurality of operating positions, it may happen that an unwanted operating configuration is selected such as connecting the fluid inlet to the unwanted outlet not connected to the supply network.

These errors can have detrimental consequences (in the above mentioned example flooding of the meter room occurs and, as a result, fluid waste). Document EP1748234 discloses a valve body for hydraulic systems having a seat for an on-off valve, a seat for a filter and a seat for a check valve. Water entering from inlet will proceed through the ball valve. Downstream the valve seat, the body has a laterally inclined portion being the seat for the filter to be fit therein to an inner abutment which defines the operating position for the filter, such that the latter is passed through by the liquid when the on-off valve is open. The filter is held within its housing by a lid. A third seat coaxial with the seat of the on-off valve is provided on the valve body to house a check valve. The fluid passes the check valve and exits through an outlet to the supply network.

Document DE9205469U discloses the use of a valve according to the preamble of claim 1. In this context, it is a technical task of the present invention to make available the use of a valve that is devoid of the above mentioned drawbacks.

Within the scope of this technical task, it is an aim of the present invention to propose a valve that does not require dedicated warehouses or useless transport operations and avoids management of two distinct products.

Another important aim of the invention is to make available a valve of easy and simple utilisation, that in use differs from those presently installed as little as possible.

The foregoing and further aims, that will become apparent in the following of the present specification, are substantially achieved by using a valve having the features set out in one or more of the appended claims.

A preferred but not exclusive embodiment of a valve used in accordance with the present invention is now given by way of non-limiting example.

With reference to the accompanying drawings:

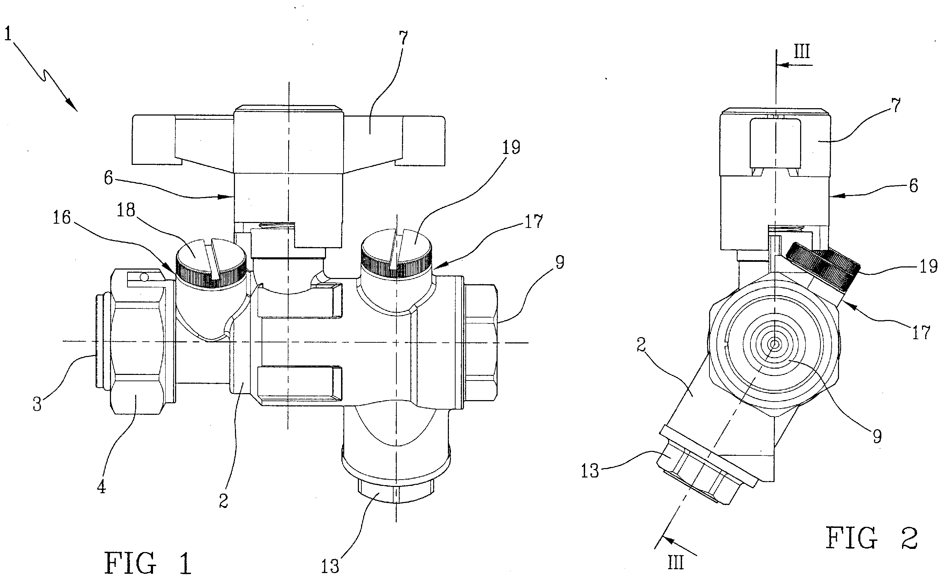

- Figs. 1 and 2 show perspective views of a valve in accordance with the present invention;
- Fig. 3 is a sectional view taken along line III-III of the valve seen in Fig. 2; and
- Figs. 4 and 5 are diagrammatic views of the valve in Fig. 1 in two different operating configurations.

With reference to the attached drawings, a valve in accordance with the invention has been generally identified by reference numeral 1.

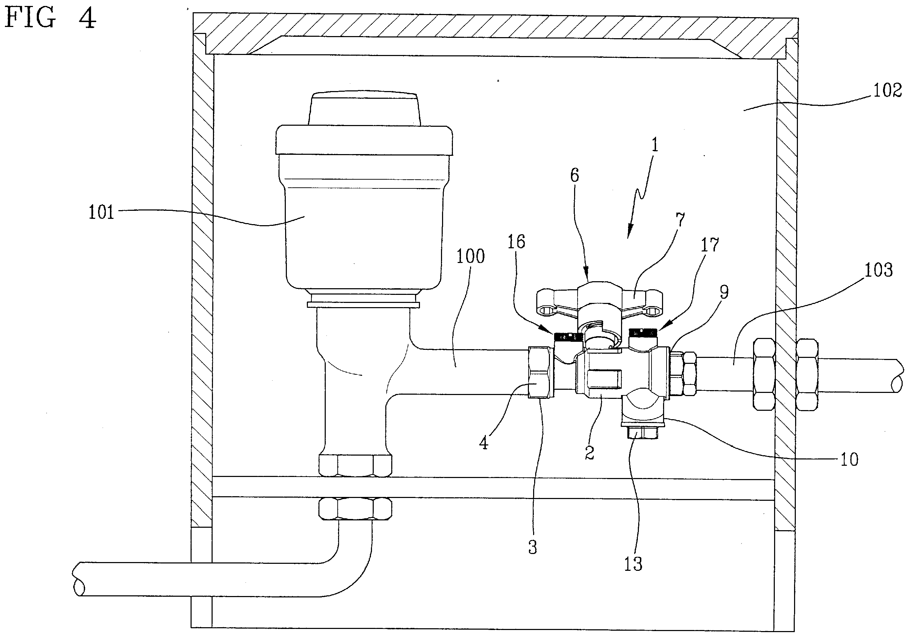

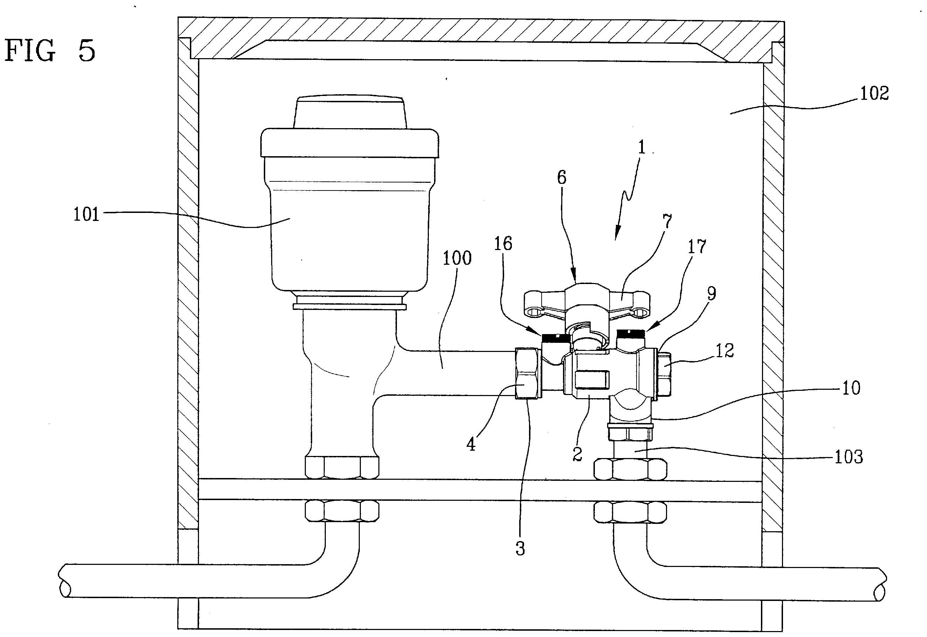

Valve 1 comprises a holding body 2 having an inlet 3 for the fluid. Inlet 3 can be steadily secured to a duct 100, an outlet duct of a meter 101, for example (see Figs. 4 and 5).

To this aim, the inlet 3 comprises an internally threaded stud bolt 4 which is adapted to engage a threaded portion of duct 100, so as to make duct 100 and outlet 3 of valve 2 integral with each other.

Extending from inlet 3, internally of the holding body 2 is a channel 5 for fluid passage. This passage channel 5 is intercepted by a closure member 6 the function of which is to leave channel 5 open or close it.

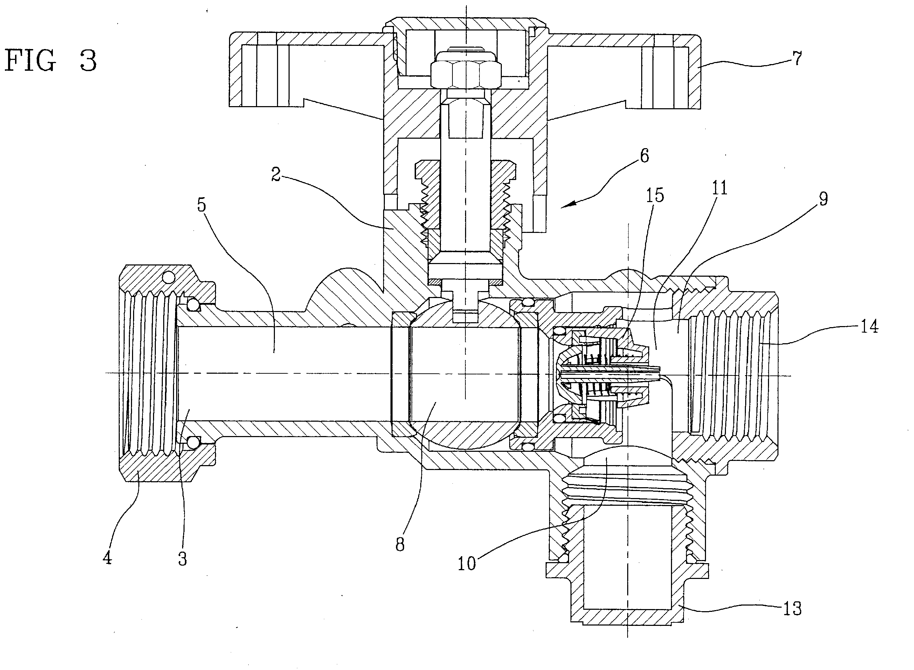

In the preferred embodiment, the closure member 6 comprises an operating member jutting out externally of the holding body 2 and connected to an intercepting ball 8 placed within the passage channel 5, as shown in Fig. 3.

Through actuation of the operating member 7, the intercepting ball 8 can take different orientations inside the passage channel 5 thus obstructing, choking and opening it.

The operating member 7 will move from a closed condition to an open condition (the last-mentioned condition being shown in Fig. 3) and vice versa. Generally, passage from one condition to the other will either increase (or decrease) the fluid flow passing therethrough. In this manner the operating member 7 and the operating conditions it will be able to take are the same as those taken by a single-outlet valve.

It should be noted that, while theoretically the valve can also take work conditions in which the flow is choked, these work conditions are generally to be avoided because deposit of limescale and residues on the ball over time would involve damage of the valve.

In other words, the two operating conditions will generally be that of maximum opening (the flow is not intercepted) and of closure.

Valve 1 comprises at least two outlets 9, 10 placed downstream of the closure member 6 for outflow of the fluid from the valve.

Advantageously, the valve has a passage chamber 11 for the fluid, which is placed downstream of the closure member 6 and is in permanent fluid communication with the first 9 and second 10 outlets.

In particular, the incoming fluid from inlet 3 reaches the passage chamber 11 (when the closure member 6 is open) and therefrom reaches both outlets 9, 10.

It is to be pointed out that bulkheads, drivable flow baffles, movable walls or the like are not present for selectively and willingly enable the fluid to flow towards one of the two outlets 9, 10.

As said above, once the fluid has got past the intercepting ball 8 of the closure member 6, it reaches both outlets 9,10 in permanent fluid communication with each other via the passage chamber 11.

Note that the inlet 3, passage channel 5, passage chamber 11 and outlets 9, 10 are of one piece construction and formed in the same holding body 2.

Both outlets 9, 10 can be closed by a respective plug 12, 13, so that closure of the unused outlet can take place without occurrence of undesirable fluid escape.

In this regard, as shown in Fig. 3, both outlets 9, 10 have an inner threading 14 for (threadingly) receiving the respective plug 12, 13 in engagement.

It should be noted that preferably threads 14 are identical with each other and the sections of the outlets 9, 10 are of same size, so that the plug of one outlet is identical with the plug of the other.

Generally, once installation of the valve has occurred, only the desired outlet will be used and the other will be sealed by the plug.

It is apparent from the above that the closure member 6 performs the only function of opening and closing the passage channel 11. In other words, when the closure member 6 is actuated, it is not able to select one outlet rather than the other, both outlets 9, 10 being fed with fluid or none of them.

In the preferred embodiment, the valve comprises two outlets 9, 10 having respective fluid exit directions that are mutually transverse and preferably orthogonal.

As shown in the drawings, representing an embodiment of the valve intended for use downstream of meters 101 in drinking water supply networks, the two outlets 9, 10 respectively are a straight outlet 9, i.e. an outlet having a fluid outflow direction substantially aligned with the fluid admission direction, and a right-angled outlet 10, i.e. an outlet having a fluid outflow direction substantially perpendicular to the fluid admission direction.

Within the passage chamber 11 a check valve 15 is provided to prevent the fluid from flowing back from outlets 9, 10 to inlet 3.

In this regard, in particular applications as the above mentioned one intended for drinking water networks, the check valve 15 (or nonreturn valve) performs the important function of inhibiting the already metered water from flowing back the opposite way, from the valve to the meter.

In addition, the check valve 15 prevents the dirty fluid or fluid containing polluting agents (soap or detergents, for example) from flowing back into the water supply network, when the closure member 6 is open.

Valve 1 further comprises a fluid drawing point 16 to draw fluid from the valve and a fluid re-admitting point 17 to re-admit fluid into the valve for creating a bypass circuit, for example in order to connect in series, relative to meter 101, a device designed to check correct reading of meter 101.

The drawing point 16 and re-admitting point 17 respectively consist of a first auxiliary opening placed downstream of inlet 3 and upstream of the closure member 6 and a second auxiliary opening placed downstream of the closure member and upstream of outlets 9, 10. In particular the second auxiliary opening is placed in the passage chamber 11.

The auxiliary openings are normally closed by respective plugs 18, 19 that are removed when it is necessary to carry out said bypass circuit.

In Figs. 4 and 5 two examples of valve 1 in use are shown.

With reference to Fig. 4, valve 1 is shown in a straight-outlet configuration (as above specified). In this configuration, inlet 3 of valve 1 is connected, through the stud bolt 4, to an exit pipeline 100 of a meter 101 inserted in a pit 102.

In the example shown, pipeline 3 feeding the supply network leaves pit 102 along a direction substantially axial to the direction of the pipeline 100 exiting meter 101. This pipeline 103 feeding the supply network is then connected to the straight outlet 9 of valve 1 and the right-angled outlet 10 is closed with plug 13.

The fluid entering valve 1 passes through the closure member, fills the passage chamber 11 and comes out of the straight outlet 9 alone, since the right-angled outlet 10 is closed.

With reference to Fig. 5, valve 1 in a right-angled outlet configuration (as above specified) is shown.

In this configuration, inlet 3 of valve 1 is connected through the stud bolt 4 to an exit pipeline 100 of a meter 101 inserted in a pit 102.

In this instance, the pipeline 103 feeding the supply network leaves pit 102 along a direction substantially perpendicular to the direction of the pipeline 100 exiting meter 101. This pipeline 103 feeding the supply network is then connected to the right-angled outlet 10 of valve 1 and the straight outlet 9 is closed with plug 12.

The fluid entering valve 1 passes through the closure member 6, fills the passage chamber 11 and exits from the right-angled outlet 10 alone, since the straight outlet 9 is closed.

It should be noted that the position of the operating member 7 (and consequently the closure member) is the same for the valves shown in Figs. 4 and 5.

The invention achieves the intended purposes.

In fact, the two outlets 9, 10 of valve 1 allow the same to be used both in a straight and in a right-angled configuration, so that stocks dedicated to each type of valves are avoided, as well as management of two distinct products and transport of two different types of valves only one of which will be finally used.

In addition, the passage chamber 11 bringing the two outlets 9, 10 into fluid communication with each other ensures easy construction of the valve and, as a result, low production costs.

Again, since the closure member 6 only carries out opening and closure of both outlets, easy and safe use of the valve is ensured, which valve is quite identical (in terms of positions of the operating members and closure member) with those with a single outlet that are presently commonly used in waterworks.

## Claims

1. Use of a valve for opening and closing the fluid connection between a meter (101) placed upstream of the valve and a supply line placed downstream of said valve, the valve comprising an inlet (3) for a fluid, a first (9) and a second (10) outlets for the fluid, and a closure member (6) placed between said inlet (3) and the outlets (9, 10) to bring the inlet (3) and the outlets (9, 10) into fluid communication with each other and break the fluid communication between them, said first (9) and second (10) outlets having respective outflow directions for the fluid that are orthogonal to each other, the two outlets (9, 10) respectively being a straight outlet (9) having the fluid outflow direction substantially aligned with a fluid admission direction, and a right-angled outlet (10) having the fluid outflow direction substantially perpendicular to the fluid admission direction, a passage chamber (11) for the fluid, placed downstream of said closure member (6), along the fluid feeding direction and in permanent fluid communication with said first (9) and second (10) outlets, said first (9) and second (10) outlets being susceptible of engagement with a plug (12, 13) when unused, wherein the two outlets (9, 10) of the valve (1) allow the valve to be used both in a straight and in a right-angled configuration,
**characterised in that** the valve is used in a right-angled configuration with the fluid entering valve (1) passing through the closure member (6), filling the passage chamber (11) and exiting from the right-angled outlet (10) alone, the straight outlet (9) being closed and
**in that** the valve comprises a drawing point (16) to draw the fluid from the valve and a re-admitting point (17) to re-admit the fluid to the valve for creating a bypass circuit, in order to connect in series, relative to the meter (101), a device designed to check correct reading of the meter (101), said drawing point (16) and said re-admitting point (17) respectively consisting of a first auxiliary opening placed downstream of the inlet (3) and upstream of the closure member (6) and a second auxiliary opening put in fluid communication with the passage chamber (11).

2. Use as claimed in claim 1, wherein the valve comprises a check valve (15) placed within said passage chamber (11) to prevent the fluid from flowing back from the outlets to the inlet (3).

3. Use as claimed in anyone of the preceding claims, wherein said passage chamber (11) does not comprise movable parts adapted to divert said fluid prevailingly towards one or the other of said outlets (9, 10).

4. Use as claimed in anyone of the preceding claims, wherein said closure member (6) is only adapted to bring the inlet (3) and both outlets (9, 10) into fluid communication with each other and to break said communication between them.

5. Use as claimed in anyone of the preceding claims, wherein said closure member (6) comprises an operating member (7) connected to an intercepting ball (8), said operating member being exclusively movable between a closing condition and a maximum-opening condition and vice versa, movement from the closing condition to the opening condition causing the fluid flow to be gradually displaced towards the passage chamber (11) and the outlets (9, 10).

6. Use as claimed in claim 1, **characterised in that** the valve comprises at least one plug (12; 13) in engagement with one of the outlets (9; 10) to avoid fluid escape from said outlet.

7. Use as claimed in claim 1, **characterised in that** the valve comprises a holding body (2) of one piece construction and defining said inlet (3) and said outlets (9, 10).

## Patentansprüche

1. Verwendung eines Ventils für ein Öffnen und ein Schließen der Fluidverbindung zwischen einem Zähler (101), welcher stromaufwärts des Ventils platziert ist, und einer Zuführungsleitung, welche stromabwärts des Ventils platziert ist, wobei das Ventil umfasst: einen Einlass (3) für ein Fluid, einen ersten (9) und einen zweiten (10) Auslass für das Fluid und ein Verschlusselement (6), welches zwischen dem Einlass (3) und den Auslässen (9, 10) platziert ist, um den Einlass (3) und die Auslässe (9, 10) in Fluidkommunikation miteinander zu bringen und um die Fluidkommunikation zwischen ihnen zu unterbrechen, wobei der erste (9) und zweite (10) Auslass jeweils Ausflussrichtungen für das Fluid aufweisen, welche senkrecht zueinander liegen, wobei die zwei Auslässe (9, 10) jeweils ein gerader Auslass (9), welcher die Fluid-Ausflussrichtung aufweist, welche im Wesentlichen mit einer Fluid-Einlassrichtung ausgerichtet ist, und ein Auslass unter einem rechten Winkel (10) sind, welcher eine Fluid-Ausflussrichtung aufweist, welche im Wesentlichen senkrecht zu der Fluid-Einlassrichtung ausgerichtet ist, eine Durchgangskammer (11) für das Fluid, welche stromabwärts des Verschlusselements (6) platziert ist, entlang der Zufuhrrichtung und in permanenter Fluidverbindung mit dem ersten (9) und dem zweiten (10) Auslass, wobei der erste (9) und der zweite (10) Auslass, wenn nicht in Benutzung, empfänglich für einen Eingriff mit einem Stopfen (12, 13) sind, wobei die zwei Auslässe (9,10) des Ventils (1) erlauben, dass das Ventil sowohl in einer geraden Konfiguration als auch in einer Konfiguration unter einem rechten Winkel verwendet wird,
**dadurch gekennzeichnet, dass** das Ventil in einer Konfiguration unter einem rechten Winkel verwendet wird, wobei das Fluid, welches in das Ventil (1) eintritt, durch das Verschlusselement (6) hindurch geht, die Durchgangskammer (11) füllt und nur aus dem Auslass unter einem rechten Winkel (10) austritt, wobei der gerade Auslass (9) geschlossen wird und
dass das Ventil einen Entnahmepunkt (16) zum Entnehmen des Fluids aus dem Ventil und einen Wiedereinlasspunkt (17) zum Wiedereinlassen des Fluids in das Ventil zum Erzeugen eines Bypass-Kreislaufs umfasst, um relativ zu dem Zähler (101) in Reihe eine Vorrichtung zu verbinden, welche dafür ausgelegt ist, ein korrektes Ablesen des Zählers (101) zu überprüfen, wobei der Entnahmepunkt (16) und der Wiedereinlasspunkt (17) jeweils aus einer ersten Hilfsöffnung, welche stromabwärts des Einlasses (3) und stromaufwärts des Verschlusselements (6) platziert ist und einer zweiten Hilfsöffnung, welche in Fluidkommunikation mit der Durchgangskammer (11) gebracht ist, bestehen.

2. Verwendung nach Anspruch 1, wobei das Ventil ein Rückschlagventil (15) umfasst, welches innerhalb der Durchgangskammer (11) platziert ist, um das Fluid an einem Zurückströmen von den Auslässen zu dem Einlass (3) zu hindern.

3. Verwendung nach einem der vorhergehenden Ansprüche, wobei die Durchgangskammer (11) keine beweglichen Teile umfasst, welche dafür eingerichtet sind, um das Fluid vorwiegend zu einem oder zu dem anderen der Auslässe (9, 10) umzulenken.

4. Verwendung nach einem der vorhergehenden Ansprüche, wobei das Verschlusselement (6) nur dafür eingerichtet ist, den Einlass (3) und beide Auslässe (9, 10) in Fluidkommunikation miteinander zu bringen und diese Kommunikation zwischen ihnen zu unterbrechen.

5. Verwendung nach einem der vorhergehenden Ansprüche, wobei das Verschlusselement (6) ein Betätigungselement (7) umfasst, welches mit einer unterbrechenden Kugel (8) verbunden ist, wobei das Betätigungselement ausschließlich zwischen einem Verschlusszustand und einem Maximal-Offen-Zustand und umgekehrt bewegbar ist, wobei eine Bewegung von dem Verschlusszustand zu dem Offen-Zustand bewirkt, dass der Fluidstrom allmählich in Richtung der Durchgangskammer (11) und der Auslässe (9, 10) versetzt wird.

6. Verwendung nach Anspruch 1, dadurch charakterisiert, dass das Ventil mindestens einen Stopfen (12; 13) in Eingriff mit einem der Auslässe (9; 10) umfasst, um ein Ausströmen eines Fluids aus dem Auslass zu vermeiden.

7. Verwendung nach Anspruch 1, dadurch charakterisiert, dass das Ventil einen Halterungskörper (2) einer Ein-Teil-Konstruktion umfasst und den Einlass (3) und die Auslässe (9, 10) definiert.

## Revendications

1. Utilisation d'une vanne pour ouvrir et fermer la connexion de liquide entre un dispositif de mesure (101) placé en amont de la vanne et une conduite d'alimentation placée en aval de ladite vanne, la vanne comprenant un orifice d'entrée (3) destiné à un liquide, un premier (9) et un second (10) orifices de sortie pour le liquide, et un élément de fermeture (6) placé entre ledit orifice d'entrée (3) et les orifices de sortie (9, 10) pour porter l'orifice d'entrée (3) et les orifices de sortie (9, 10) en communication fluide l'un avec l'autre et rompre la communication fluide entre eux, lesdits premier (9) et second (10) orifices de sortie ayant des sens d'écoulement vers l'extérieur respectifs pour le liquide qui sont orthogonaux l'un par rapport à l'autre, les deux orifices de sortie (9, 10) étant respectivement un orifice de sortie linéaire (9) ayant le sens d'écoulement vers l'extérieur du liquide sensiblement aligné avec un sens d'admission de liquide, et un orifice de sortie à angle droit (10) ayant le sens d'écoulement vers l'extérieur du liquide sensiblement perpendiculaire au sens d'admission de liquide, une chambre de passage (11) pour le liquide, placée en aval dudit élément de fermeture (6), le long du sens d'alimentation de liquide et en communication fluide permanente avec lesdits premier (9) et second (10) orifices de sortie, lesdits premier (9) et second (10) orifices de sortie étant susceptibles de mise en prise avec un bouchon (12, 13) lorsqu'ils ne sont pas utilisés, les deux orifices de sortie (9, 10) de la vanne (1) permettant à la vanne d'être utilisée à la fois en une configuration linéaire et à angle droit,
**caractérisée en ce que** la vanne est utilisée en une configuration à angle droit avec le liquide pénétrant dans la vanne (1) passant à travers l'élément de fermeture (6), remplissant la chambre de passage (11) et sortant de l'orifice de sortie à angle droit (10) seul, l'orifice de sortie linéaire (9) étant fermé et **en ce que** la vanne comprend un point d'extraction (16) pour extraire le liquide de la vanne et un point de réadmission (17) pour réadmettre le liquide au niveau de la vanne afin de créer un circuit de dérivation, afin de connecter en série, par rapport au dispositif de mesure (101), un dispositif conçu pour vérifier la lecture correcte du dispositif de mesure (101), ledit point d'extraction (16) et ledit point de réadmission (17) étant respectivement constitués d'une première ouverture auxiliaire placée en aval de l'orifice d'entrée (3) et en amont de l'élément de fermeture (6) et une seconde ouverture auxiliaire placée en communication fluide avec la chambre de passage (11).

2. Utilisation telle que revendiquée selon la revendication 1, dans laquelle la vanne comprend une clapet anti-retour (15) placée entre ladite chambre de passage (11) pour empêcher le liquide de s'écouler vers l'arrière depuis les orifices de sortie vers l'orifice d'entrée (3).

3. Utilisation telle que revendiquée selon l'une quelconque des revendications précédentes, dans laquelle ladite chambre de passage (11) ne comprend pas de pièces mobiles adaptées pour dévier ledit liquide de manière prédominante vers l'un ou l'autre desdits orifices de sortie (9, 10).

4. Utilisation telle que revendiquée selon l'une quelconque des revendications précédentes, dans laquelle ledit élément de fermeture (6) est uniquement adapté pour porter l'orifice d'entrée (3) et les deux orifices de sortie (9, 10) en communication fluide l'un avec l'autre et pour briser ladite communication entre eux.

5. Utilisation telle que revendiquée selon l'une quelconque des revendications précédentes, dans laquelle ledit élément de fermeture (6) comprend un élément de fonctionnement (7) raccordé à une bille d'interception (8), ledit élément de fonctionnement étant exclusivement mobile entre un état fermé et un état d'ouverture maximale et vice versa, le mouvement depuis l'état de fermeture vers l'état d'ouverture conduisant l'écoulement de liquide à se déplacer progressivement vers la chambre de passage (11) et les orifices de sortie (9, 10).

6. Utilisation telle que revendiquée selon la revendication 1, **caractérisée en ce que** la vanne comprend au moins un bouchon (12 ; 13) en prise avec l'un des orifices de sortie (9:10) pour éviter l'échappement de liquide dudit orifice de sortie.

7. Utilisation telle que revendiquée selon la revendication 1, **caractérisée en ce que** la vanne comprend un corps de maintien (2) d'une construction en une pièce et définissant ledit orifice d'entrée (3) et lesdits orifices de sortie (9, 10).
